# EUROPÄISCHE PATENTSCHRIFT

(11) **EP 0 518 004 B1**
(45) Veröffentlichungstag und Bekanntmachung des Hinweises auf die Patenterteilung: **27.07.1994**
(21) Anmeldenummer: 92104564.7
(22) Anmeldetag: 17.03.1992
(51) Int. Cl.: B29B 17/00, C08J 11/06

(54) **Recyclingverfahren für faserverstärkte thermoplastische Materialien**
Process for recycling fibre reinforced thermoplastic materials
Procédé pour le recyclage de matériaux thermoplastiques renforcés par des fibres

(30) Priorität: 11.06.1991 DE 4119225; 18.02.1992 DE 4204776
(43) Veröffentlichungstag der Anmeldung: 16.12.1992
(73) Patentinhaber: RÜTGERSWERKE AKTIENGESELLSCHAFT, 60326 Frankfurt (DE)
(72) Erfinder: Knop, André, Dr., W-6380 Bad Homburg v. d. Höhe (DE); Meier, Bert, Dr., W-5750 Menden (DE); Gardziella, Arno, Dr., W-5810 Witten-Rüdinghausen (DE); Braun, Ulrich, Dr., W-5860 Iserlohn 7 (DE); Hansen, Achim, Dr., W-5860 Iserlohn 7 (DE)

(56) Entgegenhaltungen:
- DE-A- 2 337 821
- DE-A- 3 937 249
- JP-A-61 152 761
- CONSERVATION & RECYCLING, Bd.8, Nr. 3/4, 1985, Oxford, G.B. Seiten 419- 428 SPAAK 'RECYCLING A MIXTURE OF PLASTICS : A challenge in today's environment
- DATABASE WPIL Week 8634, Derwent Publications Ltd., London, GB; AN 86-222027

## Beschreibung

Die Erfindung betrifft ein neues Recyclingverfahren, durch das glasfaserverstärkte thermoplastische Kunststoffe neuen Verwendungen zugeführt werden.

Bei der Verarbeitung faserverstärkter, thermoplastischer Kunststoffe fallen etwa 10 % Abfall an, der nicht einfach wieder aufgeschmolzen und wiederverwendet werden kann. Außerdem fallen nach Gebrauch von thermoplastischen Verbundwerkstoffen diese als Abfall an, dessen Entsorgung zunehmend schwieriger und teurer wird, da die Kapazitäten der Deponien abnehmen, und die Verbrennung von Kunststoffen zum Zweck der Gewinnung von Heizenergie auf immer größer werdenden Widerstand stößt. Zusätzlich sind Hersteller und Verarbeiter solcher Kunststoffe durch eine Gesetzesvorlage vom August 1990 unter Druck geraten, wonach z. B. die Automobilindustrie zur Rücknahme der Altautos verpflichtet werden soll, und nicht wiederverwendbare Teile künftig als Sondermüll behandelt werden sollen.

Es ist bekannt, bei glasmattenverstärkten Thermoplasten (GMT-Materialien), die etwa für Stoßfängersysteme oder Motorkapseln eingesetzt werden, die Altteile erneut aufzuschmelzen und umzupressen. Da sich dabei die mechanischen Eigenschaften verschlechtern (vergl. Chem. Ind. 90, 30 bis 34), ist die Zahl der Wiederverarbeitungsstufen eng begrenzt, bzw. die wiederverwendeten Produkte sind jeweils Formteile, an die geringere Anforderungen gestellt werden.

Desweiteren lassen sich GMT-Materialien, ebenso wie andere glasfaserverstärkte thermoplastische Materialien granulieren und dieses Granulat kann, eventuell nach Zusatz neuen thermoplastischen Materials, erneut verpreßt oder im Spritzgußverfahren verarbeitet werden.

Auch dabei fallen die mechanischen Eigenschaften ab, so daß lediglich zwei Verwertungsstufen technisch sinnvoll sind. Danach verbleibt nur noch die Verbrennung, wenn die Ablagerung auf einer Deponie vermieden werden soll. Dies gilt umso mehr, als die Einsatzmöglichkeiten qualitativ geringerwertiger Kunststoffprodukte mengenmäßig beschränkt ist.

Es ist daher Aufgabe der Erfindung, ein Verfahren bereitzustellen, bei dem die Verwertungsstufen von glasfaserverstärkten thermoplastischen Materialien erweitert werden, bzw. bei dem eine Verwertung gefunden wird, die nicht als ein Schritt zur Qualitätsminderung angesehen werden kann und die aus dem Zyklus des reinen Umformens herausführt.

Die Lösung der Aufgabe erfolgt durch ein Recyclingverfahren gemäß Anspruch 1, einem mit diesem Verfahren erhaltenen Granulat gemäß Anspruch 4 und Verwendung der erhaltenen Produkte gemäß der Ansprüche 5 bis 8.

Es wurde gefunden, daß sich eine hochwertige Bindemittelkomponente herstellen läßt, wenn faserverstärkte, thermoplastische Materialien zerkleinert (Korngröße < 5 mm), mit einem Novolak im Verhältnis 10 : 90 bis 90 : 10 vermischt werden und dieses Gemisch bei einer Temperatur im Bereich von 150 bis 230 °C unter Anwendung hoher Scherkräfte behandelt wird.

Das erhaltene Produkt wird vor dem Einsatz gemahlen und dient als Bindemittelkomponente für Formmassen (Preßmassen), Feuerfestmassen oder für Reibmaterialien oder Textilvlies.

Erfindungsgemäß einsetzbares faserverstärktes thermoplastisches Material sind sowohl faserverstärkte Massen, sog. BMC-Material als auch mattenverstärkte thermoplastische Materialien (GMT) sowie daraus hergestellte Formkörper. Diese Materialien sind vorwiegend mit Glasfasern verstärkt. Thermoplastische Matrix können alle polymeren Stoffe sein, die zwischen der Glasübergangstemperatur und der Zersetzungstemperatur erweichen und mechanisch verformbar sind, wie z. B. Polyolefine, Polyvinylverbindungen, ABS- oder SAN-Copolymerisate, Polyamide, Polyacetale, Polycarbonate oder Polyester. Bevorzugte Thermoplaste sind Polyethylen oder Polypropylen.

Die bevorzugt eingesetzten Materialien sind Glasmattenthermoplaste und die aus ihnen geformten Produkte. Diese GMT-Materialien bestehen aus 20 bis 45 Gew.-% Glasfasern und 55 bis 80 Gew.-% thermoplastischem Material, bevorzugt Polypropylen. Die zum Recyclisieren vorgesehenen faserverstärkten thermoplastischen Materialien werden, möglichst sortenrein, in an sich bekannter Weise auf < 5 mm zerkleinert. Dieses Mahlgut wird mit Novolak, bevorzugt einem Novolak-Pulver, im Gewichtsverhältnis 10 : 90 bis 90 : 10 vermischt.

Als Novolak sind alle im sauren Medium hergestellten Kondensationsprodukte von Phenol und Formaldehyd mit einem Molverhältnis von Phenol : Formaldehyd von 1 : 0,8 bis 1 : 0,2 einsetzbar.

Das Gemisch aus thermoplastischem Granulat und Novolak, dem ggf. 0,1 bis 0,5 Gew.-% eines Gleitmittels z. B. ein Metallstearat beigemischt sind, wird unter Anwendung hoher Scherkräfte bei erhöhter Temperatur behandelt, d. h. die beiden Komponenten werden intensiv miteinander vermengt.

Dieser Vorgang erfolgt in an sich bekannten und für derartige Prozesse üblicherweise eingesetzten beheizbaren Geräten wie z. B. im Doppelschneckenextruder, Trog- oder Muldenkneter oder in einem Ko-Kneter. Die Temperatur wird dabei so eingestellt, daß zumindest das thermoplastische Material leicht plastisch verformbar ist, andererseits aber keine Zersetzung der behandelten Materialien eintritt. Sie liegt im Bereich von 150 bis 230 °C, bevorzugt bei 180 bis 220 °C.

Aus diesem Arbeitsprozeß wird ein homogenes Produkt erhalten, das nach dem Abkühlen auf Raumtemperatur pulverisiert wird und sich hervorragend als Bindemittel oder Bindemittelkomponente für Preßmassen, Feuerfestmassen oder Reibmaterialien eignet.

Das erfindungsgemäß hergestellte Pulver oder bevorzugt Granulat wird mit einem Härter, gegebenenfalls weiteren Bindemitteln sowie mit den für derartige Mischungen üblichen Füll- und Zusatzstoffen vermischt. Die entstehenden Massen werden zu Formkörpern geformt und in der Wärme in an sich bekannter Weise gehärtet.

Als Härter dienen insbesondere Hexamethylentetramin und/oder Epoxid-, Phenol- oder Aminoharze oder deren Gemische, die in an sich aus der Novolakhärtung bekannten Mengenverhältnissen eingesetzt werden.

Insbesondere geeignet ist die Verwendung der im erfindungsgemäßen Verfahren hergestellten Pulvers als Bindemittel für Textilfasern bei der Herstellung von Textilvlies. Hier zeigt sich als weiterer überraschender Vorteil, daß die bekannten, mit Textilvlies verbundenen Geruchsprobleme stark vermindert werden.

Es ist weiterhin vorteilhaft, daß so hergestellte Textilvliese nach Gebrauch erneut ohne Qualitätsverlust recyclisiert werden können, indem sie zerkleinert als Extendermaterial duroplastischen Form- und Preßmassen zugegeben werden können.

### BEISPIELE

Die folgenden Beispiele dienen zur Erläuterung der Erfindung. Die Erfindung beschränkt sich jedoch nicht nur auf diese Beispiele. Alle Prozentangaben sind Angaben in Gew.-%.

### Beispiel 1

GMT-Material auf Polypropylenbasis mit einem Glasanteil von ca. 25 % wird auf einer Schneidmühle auf 5 mm zerkleinert und danach mit einem Phenolnovolak mit einem Schmelzpunkt nach DIN 16916, Teil 1 von 85 bis 90 °C im Verhältnis 1 : 2 intensiv vermischt. Das Vorgemisch wird mit 0,3 % Calziumstearat versehen und auf einem Doppelschneckenextruder unter Verwendung hoher Scherkräfte bei 160 bis 220 °C homogenisiert und nach dem Erkalten auf 2 mm granuliert.

Das Granulat wird auf einer Pralltellermühle feinst zermahlen und nach der Vermahlung mit 6 % Hexamethylentetramin innig vermischt. Das so gewonnene Pulverharz wird in den Beispielen 4, 6 und 8 als Bindemittel verwendet.

### Beispiel 2

Glasfaserverstärktes Polyethylen-Altmaterial mit einem Glasgehalt von ca 30 % wird auf einer Schneidmühle auf < 5 mm vermahlen und danach mit einem Phenolnovolak mit einem Schmelzpunkt nach DIN 16916, Teil 1 von 80 bis 85 °C im Verhältnis 1 : 1 innig vermischt.

Das Vorgemisch wird unter Zusatz von 0,3 % Calziumstearat auf einem Doppelschneckenextruder bei 150 bis 180 °C unter Anwendung hoher Scherkräfte homogenisiert und nach dem Erkalten, Vorgranulieren (wie in Beispiel 1) auf einer Pralltellermühle feinst zermahlen und nach der Vermahlung mit 4 % Hexamethylentetramin homogen vermischt.

Das so gewonnene härtbare Pulverharz wird in den Beispielen 3, 5, 7 und 9 als Bindemittel verwendet.

### Beispiel 3

2,2 kg erfindungsgemäßes Pulverharz aus Beispiel 2 wird mit 3,2 kg Phenolnovolak mit einem Schmelzpunkt von 80 bis 85 °C nach DIN 16916, Teil 1, 535 g Hexamethylentetramin, 15 g Montanwachs, 50 g Amidwachs und 4 kg Weichholzmehl innig vorgemischt und auf 100 bis 130 °C geheizte Walzen aufgegeben.

Die Masse wird in einer Walzzeit von etwa 3 min. zu einem zusammenhängenden Walzfell verdichtet und homogenisiert.

Das entstandene Walzfell wird abgezogen und nach dem Erkalten zu einem Granulat von < 2 mm vermahlen.

Das Granulat wird im Preßverfahren zu Formkörpern geformt und gehärtet. Die physikalischen Werte der Formkörper liegen über dem Rahmen der Phenolharzformmassen vom Typ 31 nach DIN 7708. Damit hergestellte Formteile zeichnen sich durch eine besonders gute Oberfläche aus.

### Beispiel 4

9500 g einer Mischung aus Magnesit verschiedenster Körnungen wird mit 250 g erfindungsgemäßem Pulverharz aus Beispiel 1 sowie 300 g eines 70 %igen wäßrigen Phenolresols (Phenol-Formaldehydverhältnis 1 : 1,5) homogen vermischt.

Nach dem Verpressen zu Formkörpern ergibt sich eine Kaltdruckfestigkeit von 86 N/mm².

Die kunstharzgebundenen Formkörper werden dann bis zu einer Temperatur von 180 °C erhitzt und dabei gehärtet. Sie besitzen dann eine Festigkeit, die so groß ist, daß sie gut transportiert und in entsprechende Aggregate im Stahlwerk eingebaut werden können.

Die ermittelte Kaltbiegefestigkeit liegt bei den gehärteten Formkörpern bei ca. 18 N/mm².

### Beispiel 5

Wie Beispiel 4, aber anstelle von 250 g Pulverharz aus Beispiel 1 350 g erfindungsgemäßes Pulverharz aus Beispiel 2.

Das Ergebnis ist ähnlich wie bei Beispiel 4.
Kaltdruckfestigkeit (vor dem Härten) : 90 N/mm²
Kaltbiegefestigkeit (nach dem Härten) : 21 N/mm².

### Beispiel 6

70 Gew.-Teile Textilfasergemisch werden mit 30 Gew.-Teilen des Pulverharzes aus Beispiel 1 innig vermischt. Zur Herstellung von Faservlies wird das Material einer aerodynamischen Vliesbildung unterworfen und auf einem Lochsiebblech abgelegt. Das so gewonnene ungehärtete Textilvliesgebilde wird in einem Wärmeschrank bei c. 120 °C vorgehärtet und dann in einer Presse bei 180 °C zu Platten von 250 mm x 250 mm verpreßt.

Die so gewonnenen Platten werden bezüglich Festigkeit (Belastung und Durchbiegung) und Geruch mit Produktions-Plattenmaterial verglichen, bei dem thermoplast- und glasfaserfreies Pulverharz auf Phenolharzbasis zur Anwendung kam.

Vergleich in der Festigkeit: keine Unterschiede.

Vergleich im Geruchstest (Geruchstest nach Ford): Note 1,8 bis 2,2 bei Verwendung von Pulverharz gemäß der Erfindung, Note 2,3 bis 2,7 bei Material aus der Produktion mit unmodifiziertem Pulverharz. (Die Geruchsqualität steigt mit sinkender Benotung.)

### Beispiel 7

Wie Beispiel 6, aber unter Verwendung von Pulverharz aus Beispiel 2.

Festigkeitsvergleich: ähnlich wie in Beispiel 6.

Geruchsvergleich: ähnlich wie in Beispiel 6 (Benotung des erfindungsgemäßen Materials: 1,7 bis 2,0).

### Beispiel 8

1,2 kg erfindungsgemäßes Pulverharz aus Beispiel 1 wird mit einer Mischung aus 3 kg Stahlwolle, 1,5 kg Messingspäne, 1 kg Koks, 0,5 kg Graphit, 0,5 kg Polyaramidfaser (2 mm), 1,5 kg Bariumsulfat und 0,7 kg Magnesiumoxid intensiv vermischt.

Die Mischung wird in üblicher Weise zur Herstellung von Reibbelägen verwendet. Der Reibwert, ermittelt an Prüfkörpern, welche 30 s je mm Schichtdicke bei 170 °C verpreßt und 10 Std. bei 200 °C nachgehärtet wurden, liegt bei 0,39 bis 0,40.

### Beispiel 9

Wie Beispiel 8, aber anstelle von 1,2 kg Pulverharz aus Beispiel 1 Einsatz von 1,6 kg erfindungsgemäßem Pulverharz aus Beispiel 2.

Der Reibwert nach dem Aushärten wurde mit ca. 0,4 ermittelt.

## Patentansprüche

1. Recyclingverfahren für faserverstärkte, thermoplastische Materialien, **dadurch gekennzeichnet**, daß sie zerkleinert und mit einem Novolak im Verhältnis 10 : 90 bis 90 : 10 vermischt werden, dieses Gemisch unter Anwendung hoher Scherkräfte bei einer Temperatur im Bereich von 150 bis 230 °C behandelt wird und das resultierende Produkt granuliert wird.

2. Recyclingverfahren nach Anspruch 1, **dadurch** **gekennzeichnet**, daß das thermoplastische Material mit Glasfasern verstärktes Polyethylen oder Polypropylen ist.

3. Recyclingverfahren nach den Ansprüchen 1 und 2, **dadurch gekennzeichnet**, daß das thermoplastische Material glasmattenverstärkter Thermoplast-Abfall ist.

4. Granulat aus faserverstärkten thermoplastischen Materialien, hergestellt nach einem Recyclingverfahren gemäß einem der Ansprüche 1 bis 3, **dadurch gekennzeichnet**, daß es mit Hexamethylentetramin und/oder einem oder mehreren wärmereaktiven Kondensationsprodukten aus der Gruppe der Phenol-, Amino- oder Epoxidharzen als Härtungsmittel versetzt ist.

5. Verwendung der im Verfahren nach den Ansprüchen 1 bis 3 erhaltenen Produkte bzw. des Granulats gemäß Anspruch 4 als Bindemittel für Preßmassen.

6. Verwendung der im Verfahren nach Anspruch 1 bis 3 erhaltenen Produkte bzw. des Granulats gemäß Anspruch 4 als Bindemittel für Feuerfestmassen.

7. Verwendung der im Verfahren nach Anspruch 1 bis 3 erhaltenen Produkte bzw. des Granulats gemäß Anspruch 4 als Bindemittel für Textilvlies.

8. Verwendung der im Verfahren nach Anspruch 1 bis 3 erhaltenen Produkte bzw. des Granulats gemäß Anspruch 4 als Bindemittel für Reibbeläge.

## Claims

1. Process for recycling fibre-reinforced thermoplastic materials, characterised in that they are crushed and mixed with a novolak in proportions of from 10:90 to 90:10; the mixture being treated by the application of high shearing forces and at a temperature in the range of from 150-230 °C, and the resultant product being granulated.

2. Process for recycling according to claim 1, characterised in that the thermoplastic material is polyethylene or polypropylene reinforced with glass fibres.

3. Process for recycling according to claims 1 and 2, characterised in that the thermoplastic material is glass-mat reinforced thermoplastic waste material.

4. Granulated material of fibre-reinforced thermoplastic materials manufactured using a recycling process according to claims 1 to 3, characterised in that it is mixed with hexamethylenetetramine and/or one or more heatreactive condensation products from the phenolic, amino or epoxy resin group, as a hardening material.

5. Use of the products obtained in the process according to claims 1 to 3 or the granulate according to claim 4, as a binding agent for moulding compounds.

6. Use of the products obtained in the process according to claims 1 to 3 or the granulate according to claim 4, as a binding agent for refractory materials.

7. Use of the products obtained in the process according to claims 1 to 3 or the granulate according to claim 4, as a binding agent for textile fleece.

8. Use of the products obtained in the process according to claims 1 to 3 or the granulate according to claim 4, as a binding agent for friction linings.

## Revendications

1. Procédé pour le recyclage de matières thermoplastiques renforcées par des fibres, caractérisé en ce qu'elles sont broyée et mélangées avec une novolaque dans un rapport de 10:90 à 90:10, que ce mélange est traité sous l'effet de forces de cisaillement élevées à une température dans le domaine de 150 à 230 °C et que le produit résultant est granulé.

2. Procédé de recyclage selon la revendication 1, caractérisé en ce que la matière thermoplastique est du polyéthylène ou du polypropylène renforcé par des fibres de verre.

3. Procédé selon les revendications 1 et 2, caractérisé en ce que la matière thermoplastique est un déchet de matières thermoplastiques renforcées au mat de verre.

4. Granulés préparés de matières thermoplastiques renforcées par des fibres selon un procédé de recyclage conforme aux revendications 1 à 3, caractérisés en ce qu'ils sont additionnés d'hexaméthylènetétramine et/ou d'un ou plusieurs produits de condensation thermoréactifs du groupe des resines phénoliques, aminées ou époxydiques en tant que durcisseurs.

5. Utilisation des produits obtenus dans le procédé selon les revendications 1 à 3 ou des granulés selon la revendication 4 en tant que liants pour matières à mouler par compression.

6. Utilisation des produits obtenus dans le procédé selon les revendications 1 à 3 ou des granulés selon la revendication 4 en tant que liants pour produits ignifuges.

7. Utilisation des produits obtenus dans le procédé selon les revendications 1 à 3 ou des granulés selon la revendication 4 en tant que liants pour nappes textiles.

8. Utilisation des produits obtenus dans le procédé selon les revendications 1 à 3 ou des granulés selon la revendication 4 en tant que liants pour garnitures de friction.
